Europäisches Patentamt

European Patent Office

Office européen des brevets

(19)

(11)   **EP 0 995 351 B1**

(12)   **EUROPÄISCHE PATENTSCHRIFT**

(45) Veröffentlichungstag und Bekanntmachung des Hinweises auf die Patenterteilung:
**07.01.2004   Patentblatt 2004/02**

(51) Int Cl.⁷: **A01D 43/06**

(21) Anmeldenummer: **99120378.7**

(22) Anmeldetag: **13.10.1999**

(54) **Vorrichtung zur Steuerung einer Überladeeinrichtung**

Device for controlling a transference element

Dispositif de commande d'un appareil de transfert

(84) Benannte Vertragsstaaten:
**AT BE CH CY DE DK ES FI FR GB GR IE IT LI LU MC NL PT SE**

(30) Priorität: **19.10.1998   DE 19848127**

(43) Veröffentlichungstag der Anmeldung:
**26.04.2000   Patentblatt 2000/17**

(73) Patentinhaber: **CLAAS Selbstfahrende Erntemaschinen GmbH**
**33428 Harsewinkel (DE)**

(72) Erfinder:
 • **Diekhans, Norbert, Dr.**
   **33335 Gütersloh (DE)**
 • **Huster, Jochen**
   **33330 Gütersloh (DE)**
 • **Bussmann, Christoph**
   **33428 Harsewinkel (DE)**
 • **Gamble, Sebastian**
   **32816 Schieder-Schwalenberg (DE)**

(56) Entgegenhaltungen:
**EP-A- 0 125 007          DE-A- 4 426 059**
**GB-A- 2 073 914          US-A- 4 042 132**
**US-A- 4 529 348**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf eine Vorrichtung zur Steuerung einer Überladeeinrichtung an landwirtschaftlichen Maschinen, insbesondere selbstfahrende Feldhäcksler.

In der EP 0 131 693 B1 wird eine Steuerung eines ausstoßenden Stutzen geoffenbart. Die beschriebene Vorrichtung bezieht sich auf einen gezogenen Feldhäcksler mit angehängten, nachlaufenden Transportwagen. Mittels des Stutzens wird das gehäckselte Erntegut von dem gezogenen Feldhäcksler auf den Transportwagen überladen. Der relative Winkel zwischen dem angehängten Transportwagen und dem gezogenen Feldhäcksler wir an der Koppelstelle erfaßt. Anhand dieses Winkels wird der Stutzen nach einem bestimmten Programm so gesteuert, daß das Erntegut immer in den Transportwagen trifft. Der relative Winkel zwischen Stutzen und Feldhäcksler wird ermittelt und einer Steuerung mitgeteilt.

Nachteilig wirkt sich bei dieser Vorrichtung aus, daß zwischen dem Feldhäcksler und dem angehängten Transportwagen der relative Winkel erfaßt werden muß. Dazu sind spielfreie mechanische Tastvorrichtungen mit hochauflösenden Sensoren oder optische Abtastmittel notwendig. Ist ein Transportwagen gefüllt, wird er abgehängt und ein neuer leerer Transportwagen angehängt. Die mechanische Tastvorrichtung muß erneut gekoppelt und justiert werden. Bei einer optischen Abtastvorrichtung ist es notwendig, daß jeder Transportwagen mit entsprechenden Reflektormitteln ausgestattet ist.

Einen weitere Vorrichtung zur Befüllung von Ladebehältem ist aus der DE 44 03 893 bekannt. Hier wird eine Steuerung einer Überladeeinrichtung beschrieben, bei welcher die Überladeeinrichtung anhand von optischen oder akustischen Entfernungsmessern, die die Transportbehälterbefüllung ermitteln und vermessen, gesteuert wird. Die Behälterbefüllung wird durch mehrere Sensoren um den momentanen Gutauftreffpunkt auf dem Transportwagen über Entfernungssignale ermittelt. Die Überladeeinrichtung wird dann, wenn an dieser Stelle eine bestimmte Füllhöhe erreicht ist, so lange verschwenkt, bis eine benachbarte Stelle erkannt wird, die eine geringere Füllhöhe aufweist. Ferner sind Mittel offenbart, die es ermöglichen über Endschalterkontakte fest vorgegebene, relativ Winkelstellungen des Auswurfkrümmers zur Längsrichtung der Erntemaschine anzusteuern.

Diese Überladesteuerung hat den Nachteil, daß die Entfernungssensoren sehr teuer sind. Desweiteren arbeitet diese Vorrichtung nur zufriedenstellend, wenn der Erntegutstrom etwa die Richtung der Entfernungsmeßeinrichtung besitzt, was bei einer etwa senkrecht zum Transportwagenboden ausgerichtetem Erntegutstrom der Fall ist. Wird das Erntegut auf einen an den selbstfahrenden Feldhäcksler angehängten oder von einem Zugfahrzeug hinter der Erntemaschine nachgezogenen Transportbehälter überladen versagt diese Ladevorrichtung. Ursache dafür ist die Richtung und Überladeentfernung zwischen Auswurfkappe und Transportwagen. Das Erntegut verläßt zwar die Überladeeinrichtung nahezu waagerecht wird aber mit zunehmender Überladeentfemung langsamer und der Gutstrahl nimmt eine gekrümmte Wurfbahn an. Die Entfernungsmeßvorrichtungen arbeiten anhand der von der Überladeeinrichtung vorgegebenen Abwurfrichtung. Durch die gekrümmte Wurfbahn des Erntegutes sind der Auftreffpunkt des Erntegutes auf den Transportwagen und der von den Entfernungsmessern detektierte Bereich unterschiedlich. Hierdurch ist eine zufriedenstellende Steuerung ausgeschlossen.

Die EP0 125 007 offenbart eine Vorrichtung zur Überladung von landwirtschaftlichen Erntegütern von landwirtschaftlichen Erntemaschinen auf Transportbehälter. Hierbei ist seitlich neben einem nicht abgebildeten Schlepper ein Feldhäcksler adaptiert und diesem wiederum ein Transportfahrzeug. Die Steuerung der Emteübergabevorrichtung erfolgt hierbei in Anhängigkeit von der Stellung des gezogenen Feldhäckslers zum adaptierten Transportfahrzeug. Nachteilig bei dieser Erfindung ist das stetige Neujustieren, welches nach dem Wechsel eines Transportfahrzeuges erforderlich ist. Dies verursacht zum einen lange Stillstandszeiten und zum anderen werden entsprechend hohe Anforderungen an den Fahrer gestellt, der eine genaue Einstellung vorzunehmen hat.

Einen ähnliche Vorrichtung ist aus der US 4 042 132 bekannt. Hier wird mittels eines zwischen Feldhäcksler und Transportfahrzeug integrierten Bügels der Winkel zwischen dem Feldhäckslers und dem Transportfahrzeug gemessen und in Abhängigkeit hierzu die Überladeeinrichtung gesteuert. Auch hier ist nach jedem Abkuppelvorgang eine zeitaufwendige und genaue Neujustierung vorzunehmen.

Schließlich wird in der GB 2 073 914 die Steuerung einer Übergabevorrichtung mit Hilfe einer berührungslosen Sensorik offenbart. Diese Sensorik verfügt über eine optische Signalgebung, die ihre Signale an eine Reflektoreinheit weiterleitet. Hieraus wird der Verstellgrad der Übergabevorrichtung ermittelt. Nachteilig wirken sich äußere erntebedingte Einflüsse bei der Signalgebung und dem Signalempfang aus. So entstehen beim Erntevorgang starke Staubaufwirbelungen, die eine einwandfreie Signalgebung behindern. Zudem wird durch die Reifen des vorausfahrenden Feldhäckslers Schmutz hochgeworfen, der die Reflektoreinheit verunreinigen kann. Ein Signalempfang wird dadurch ausgeschlossen.

Es ist nun Aufgabe der Erfindung eine Vorrichtung für eine Überladeeinrichtung, insbesondere für selbstfahrende Feldhäcksler mit einem Auswurfkrümmer, zur schaffen, die eine kostengünstige, zuverlässige und einfache automatische Steuerung der Überladeeinrichtung zur Überladung von Erntegut in einen Transportbehälter ermöglicht.

Die Aufgabe wird dadurch gelöst, daß der Winkel zwischen der Überladeeinrichtung und der Fahrzeuglängsrichtung aus der die Fahrtrichtung der landwirtschaftlichen Erntemaschine vorgebenden Größe berechnet wird.

Die Fahrtrichtung einer landwirtschaftlichen Erntemaschine wird in der Regel von dem Lenkeinschlag einer achsschenkelgelenkten Lenkachse vorgeben. Eine weitere Vorgabe der Fahrrichtung kann durch eine Verdrehung von Fahrzeugrahmenteilen, denen jeweils mindestens eine starre

Achse zugeordnet ist, um ein vertikale Achse erfolgen. Diese sogenannte Knicklenkungen wird an selbstfahrenden Vollerntern, wie beispielsweise einem Zuckerrübenvollernter und an selbstfahrenden Feldhäckslern verwendet.

Es hat sich in der Praxis gezeigt, daß es möglich ist den Auswurfkrümmer an Feldhäcksler automatisch unabhängig von einer Transportbehältererfassung zu steuern. Auf eine Rückmeldung über den Befüllgrad oder die relative Position des Transportbehälters zum Feldhäcksler kann verzichtet werden.

Diese Art Steuerung findet besonders dann Anwendung, wenn das Erntegut auf einen nachfolgenden Transportbehälter überladen wird. Ein Transportbehälter kann auf verschiedenen Arten hinter einem Feldhäcksler transportiert werden. Im einfachsten Fall besitzt der Transportbehälter ein eigenes Fahrwerk und wird an der Zugöse des Feldhäckslers angehängt. Dabei kann es sich um einen Überladewagen oder um einen einfachen Transportwagen handeln. Feldhäcksler können auch im Fahrzeugheck mit einer Sattelaufliegerkupplung ausgestattet sein. Hier wird dann ein Sattelauflieger angehängt und bei der Befüllung hinter dem Häcksler hergezogen. Ferner besteht auch die Möglichkeit eine Transportbehälter mit auf das Fahrgestell des Feldhäckslers zu integrieren. Der befüllte Transportbehälter wird dann mittels eines Kratzbodens oder einer Kippeinrichtung auf ein Transportfahrzeug überladen. Eine weitere Möglichkeit besteht darin, daß der Transportbehälter ein selbstfahrender Transportwagen oder ein Transportwagen ist, der durch ein Zugfahrzeug direkt hinter dem Feldhäcksler hergezogen wird.

Bei den genannten Beispielen für die Überladung des Erntegutes auf den Transportbehälter, folgt der Transportbehälter dem Fahrweg der landwirtschaftlichen Erntemaschinen mit zeitlichem Versatz und geringer Abweichung nach. Dabei ist in den genannten Überladebeispielen die Überladeeinrichtung annähernd in Richtung der Erntefahrzeuglängsrichtung ausgerichtet. In der Regel wird mir einer landwirtschaftlichen Erntemaschine entlang von vorgegebenen Erntegutreihen oder Schwaden geerntet. Um mit möglichst wenig Verlusten zu Ernten, werden die Reihen oder Schwaden geradeaus gesät beziehungsweise abgelegt. Unregelmäßigkeiten in den Reihen beziehungsweise Schwaden werden weitgehendst bei der Aufnahme des Erntegutes durch den Erntevorsatz ausgeglichen. Fahrtrichtungsänderungen bei der Aufnahme von Erntegut sind daher nur gering. Aus der die Fahrtrichtung vorgebenden Größe läßt sich daher eine Information dahingehend ableiten, daß man annehmen kann, wo sich der Transportbehälter befindet. Die Überladeeinrichtung kann dann ohne Rückmeldung entsprechend gesteuert werden.

Die Vorrichtung besteht aus einer Auswerteelektronik mit Abfühlmitteln für die Erfassung der relativen Winkelstellung der die Fahrtrichtung der landwirtschaftlichen Erntemaschine vorgebenden Größe und mindestens der relativen Winkelstellung der Überladeeinrichtung zur Erntemaschinenlängsrichtung. Der Auswerteelektronik stehen bei Bedarf auch weitere Erntemaschinenparameter, wie beispielsweise die Fahrgeschwindigkeit und die Stellung von weiteren Leitelementen an der Überladeeinrichtung zur Ermittlung der Überladerichtung zur Verfügung stehen. Vorteilhaft ist die Auswerteeinrichtung zur Erfassung dieser Parameter an einem elektronischen Bussystem angekoppelt. Die Auswerteelektronik ermittelt die die Fahrtrichtung der Erntemaschine vorgebende Größe und berechnet dann unter Berücksichtigung weiterer Parameter einen Soll-Krümmerwinkel. Aus der Regeldifferenz von Ist-Krümmerwinkel zu Soll-Krümmerwinkel wird dann eine Stellgröße für die Verstellung der Überladerichtung abgeleitet. Bei der Verstellung, durch an sich bekannte Stellmittel wie beispielsweise eine elektrohydraulische Verstelleinrichtung, wird dann die Verstellgeschwindigkeit in Abhängigkeit der Stellgröße gewählt.

Die Berechnung der Überladesollgröße kann aus einfachen Versuchen abgeleitet werden. Der für eine gezielte Überladung notwendige Winkel der Überladeeinrichtung zur Fahrzeuglängsrichtung, im folgenden Krümmerwinkel genannt, kann empirisch ermittelt und in Form eines Datenfeldes oder anhand einer daraus ermittelbaren Kennlinie in der Auswerteelektronik abspeichert werden.

Ferner besteht die Möglichkeit, die Steuerung der Überladeeinrichtung auch anhand von Definitionen durch theoretische Berechnungen vorzunehmen.

Bei einer knickgelenkten Erntemaschine, bei welcher der Transportbehälter direkt auf dem Fahrzeugrahmen der landwirtschaftlichen Erntemaschine aufgesetzt ist, kann der Krümmerwinkel so gesteuert werden, daß das Erntegut beispielsweise in Richtung des Transportbehältermitte überladen wird.

Wird die Vorrichtung an einer knickgelenkten Erntemaschine mit angehängtem Sattelauflieger verwendet, so kann der Krümmerwinkel so gesteuert werden, daß der Erntegutstrahl in Richtung der Sattelkupplungsmitte überladen wird. Es ist in diesem Fall davon auszugehen, daß sich über der Sattelaufliegerkupplung ein Transportbehälter befindet.

In beiden Fällen kann der dazu notwendige Soll-Krümmerwinkel aus den geometrischen Abmessungen der Erntemaschine und dem Ist-Knickwinkel berechnet werden. An welcher Stelle der Erntegutstrahl tatsächlich in dem Transportbehälter auftrifft, hängt von dem Befüllgrad und von der Stellung von weiteren Erntegutstrahlleitelementen, wie Krümmerhöhe oder Krümmerklappe ab.

Für den Überladevorgang, bei welchem keine direkte Kopplung zu dem Transportbehälter besteht, kann die Steuerung des Krümmerwinkels anhand der die Fahrtrichtung vorgebenden Größe und einer Überladezielentfernung vorgenommen werden. Diese Überladezielentfernung kann eine fest vorgegebene Entfernung oder eine vom Emtemaschinenbediener vorgebare Größe sein. Weiter kann die Überladezielentfernung aus den die Überladeentfernung der Überladeeinrichtung bestimmenden Elementen berechnet werden. Die Überladeentfernung kann aus den Einstellungen der Überladeeinrichtung abgeleitet werden, indem beispielsweise die Krümmerhöhe, die Krümmerklappenstellung und die Überladezielhöhe auf den Transportbehälter in eine Überladezielentfernung umgerechnet wird.

In einer Ausgestaltung ist es vorgesehen, die Überladezielentfernung in die Vorrichtung einzuprogrammieren. Dies kann mittels Betätigung eines hierzu speziell vorgesehenen Programmiertasters erfolgen. Die Überladeeinrichtung wird beispielsweise manuell so eingestellt, daß der Emtegutstrom auf die Transportbehältermitte überladen wird. Diese Überladeentfernung wird dann als weitere Überladezielentfernung einprogrammiert. Bei der weiteren automatischen Steuerung der Überladerichtung wird dann eine manuell vorgenommene Veränderungen der Überladeentfernung, beispielsweise der Krümmerklappenstellung, nicht weiter berücksichtigt.

Die Verschwenkung der Überladeeinrichtung erfolgt beispielsweise mittels eines Hydromotors. Es ist nun einen weitere Ausgestaltung der Erfindung, daß die Verschwenkgeschwindigkeit der Überladeeinrichtung mit variabler Geschwindigkeit vorgenommen werden kann. Die Massenträgheit der Überladeeinrichtung hat zur Folge, daß die Schwenkeinrichtung bei einer automatischen Verschwenkung nach dem Abschalten des Schwenkantriebs nachläuft. Dieses Problem läßt sich durch zwei Möglichkeiten lösen. Zum einen kann man den Antrieb vor dem erreichen der Sollposition abschalten oder zum anderen die Schwenkgeschwindigkeit bis zur Sollposition gegen Null regeln. Die Variation der Schwenkgeschwindigkeit benötigt eine besondere Steuerung mit Proportionalventilen. Einen einfache Lösung des Problems wird durch eine mehrstufige Schwenkgeschwindigkeitssteuerung erreicht. Im einfachsten Fall geschieht dies durch eine zweistufige Ventilschaltung. Aus der Größe der Stellgröße wird angeleitet, mit welche Schwenkgeschwindigkeit die Überladeeinrichtung automatisch verschwenkt wird. Bei der Unterschreitung einer bestimmten Stellgröße wird dann der Schwenkantrieb auf eine verringerte Schwenkgeschwindigkeit umgeschaltet. Die Sollüberladerichtung läßt sich so mit ausreichender Genauigkeit steuern.

In einer weiteren Ausgestaltung ist es vorgesehen, daß die Vorrichtung auch den von der landwirtschaftlichen Erntemaschine zurückgelegten Fahrweg erfaßt. Wie schon oben erwähnt, folgt der Transportbehälter der landwirtschaftlichen Erntemaschine bei dem Überladen von Erntegütern beabstandet nach. Wird von dem Maschinenbediener eine neue Fahrtrichtung gewählt, das heißt die Erntemaschine fährt mit verändertem Kurvenradius weiter, ändert sich auch die relative Überladerichtung der Überladeeinrichtung zum Transportbehälter.

Für die Überladung auf direkt mit der landwirtschaftlichen Erntemaschine gekoppelten Transportbehältern kann die Überladeeinrichtung ohne Verzögerung auf die neue notwendige Überladerichtung eingestellt werden. Besteht aber keine Kopplung, muß die Überladeeinrichtung anhand einer bestimmten Vorgabe gesteuert werden. Da der Transportbehälter nachfolgt, muß er zuerst noch auf dem alten, zurückliegenden Fahrweg der landwirtschaftlichen Erntemaschine bleiben bis die Fahrweg mit dem neuen Kurvenradius beginnt. Die Überladerichtung muß daher so gesteuert werden, daß der Gutstrom in den sich auf dem zurückliegenden Fahrweg befindlichen Transportbehälter trifft.

Es hat sich als besonders vorteilhaft erwiesen, wenn man die Überladeeinrichtung anhand des zurückgelegten Fahrweges steuert. Für einen neuen Kurvenradius beziehungsweise eine neue die Fahrtrichtung der landwirtschaftlichen Erntemaschine vorgebenden Größe, gibt die Vorrichtung einen neuen Soll-Krümmerwinkel vor. Dieser wird aber nicht sofort von der Vorrichtung, sondern in Abhängigkeit einer zurückgelegten Fahrstrecke eingestellt. Die Abhängigkeit ist beispielsweise eine linearer Zusammenhang. Die zurückgelegte Fahrstrecke läßt sich einfach aus der Erfassung der Fahrgeschwindigkeit ableiten.

In einer weiteren Ausgestaltung ist es vorgesehen, daß die Schwenkgeschwindigkeit der Überladeeinrichtung in Abhängigkeit der Fahrgeschwindigkeit gesteuert wird. Dadurch ergeben sich ebenfalls fahrwegabhängige beziehungsweise verzögerte Überladerichtungsänderungen. Die fahrwegabhängige Steuerung hat den Vorteil, daß bei einem Stillstand der Maschine und gleichzeitigen Änderung der die Fahrtrichtung der landwirtschaftlichen Erntemaschine vorgebenden Größe die Überladerichtung nicht automatisch verändert wird.

Der zurückgelegte Fahrweg wird in einer weiteren Ausgestaltung der Vorrichtung in Verbindung mit der die Fahrtrichtung vorgebenden Größe in einem Ringspeicher abgespeichert. Aus den gespeicherten Werten läßt sich dann der Verlauf des zurückgelegten Fahrweges ermitteln. Durch die Verwendung eines Ringspeichers werden nur eine geringe Anzahl von Werten für die Berechnung des zurückgelegten Fahrweges bereitgehalten. Diese Speicherinhalte werden in einem bestimmten Zeittakt oder vorteilhaft nur nach dem Fahren einer bestimmten Fahrwegstrecke mit einem neuen Datenpaar aktualisiert.

Mit zusätzlichen Angaben, wie beispielsweise eine programmierte Überladezielentfemung und - höhe, wird die Überladerichtung so gesteuert, daß der Erntegutstrahl in den auf dem zurückliegenden Fahrweg befindlichen Transportbehälter trifft. Aus den einzelnen abgespeicherten Wertepaaren wird von der momentanen Position aus, der zurückgelegte Fahrwegverlauf berechnet. Die einzelnen Wertepaare beinhalten eine Fahrstrecke und je eine zugehörige die Fahrtrichtung der Erntemaschine vorgebende Größe. Aus beiden Werten läßt sich die Änderung der Emtemaschinenposition, ausgehende von einem an der momentanen Fahrtrichtung ausgerichteten Koordinatensystem, ermitteln. Die Berechnung des zurückgelegten Fahrwegverlaufes ist nicht sehr genau. Änderungen der die Fahrtrichtung der landwirtschaftlichen Erntemaschine vorgebenden Größe, zwischen dem Speichern von benachbarten Wertepaaren, werden nicht erfaßt. Desweiteren ist die Fahrwegstrecke schlupfbehaftet. Ist die Überladerichtung nicht exakt ausgerichtet, wird dies zuerst durch die Breite des Transportbehälters und eine sich anschließend Korrektur des Fahrkurses des Transportfahrzeuges ausgeglichen. Es ist ferner vorgesehen, daß die Steuerung der Überladeeinrichtung jederzeit durch eine manuelle Steuerung der Überladerichtung möglich ist, ohne das dadurch die automatische Steuerung der Überladeeinrichtung deaktiviert wird. Dieser manuell eingegebene Offset wird bis zur nächsten manuellen Veränderung oder bis zur Deaktivierung der Vorrichtung beibehalten.

Zur Aktivierung beziehungsweise Deaktivierung der Vorrichtung ist ein einfacher, mit der Steuerung der Vorrichtung in Verbindung stehender, Taster vorgesehen. Dieser kann beispielsweise ein Fußtaster auf dem Boden des Fahrerstands einer landwirtschaftlichen Erntemaschine sein. Eine Aktivierung/ Deaktivierung der Vorrichtung wird jeweils über ein akustisches Signal oder eine optische Anzeige angezeigt.

Die Erfindung ist nicht auf die Steuerung der Überladerichtung für das Überladen von Erntegüter von landwirtschaftlichen Erntemaschinen auf nachfolgende Transportbehälter beschränkt. Es ist für den Fachmann durchaus naheliegend die die Fahrtrichtung der landwirtschaftlichen Erntemaschine vorgebende Größe auch auf weitere Steuerfunktionen der Überladeeinrichtung anzuwenden. So ist durchaus denkbar die die Fahrtrichtung der landwirtschaftlichen Größe vorgebenden Größe auch zur Steuerung der Überladeentfernung der Einrichtung oder aber auch in bestimmten Grenzen zur Steuerung der Überladeeinrichtung bei Kurvenfahrt der Erntemaschine mit Überladung der Erntegüter auf einen parallelfahrenden Transportbehälter anzuwenden. Desweiteren ist es denkbar, die Überladeeinrichtung zur Erzeugung einer Verstellung der Leitklappe am Auswurfkrümmer oder des Krümmerwinkels eines selbstfahrenden Feldhäckslers zu verwenden, um eine Art oszillierende Verteilbewegung zu erzeugen.

Nachfolgend wird die Erfindung anhand von Zeichnungen näher erläutert.

Es zeigen:

Fig.1   eine selbstfahrenden Feldhäcksler mit Knicklenkung und direkt aufgesetzten Transportbehälter

Fig.2   eine Seitenansicht eines selbstfahrenden Feldhäckslers mit Knicklenkung und Sattelaufliegerkupplung

Fig.3   eine Draufsicht auf einen selbstfahrenden Feldhäcksler mit Knicklenkung und Sattelaufliegerkupplung

Fig.4   eine Draufsicht auf einen selbstfahrenden Feldhäcksler wie Figur 3 mit der Angabe von Krümmerwinkel und Knickwinkel

Fig.5   die Darstellung der geometrischen Abmessungen der Erntemaschine aus Figur 2 und 4

Fig.6   die Seitenansicht eines knickgelenkten selbstfahrenden Feldhäckslers mit angehängtem Sattelauflieger

Fig.7   die Draufsicht auf einen knickgelenkten selbstfahrenden Feldhäckslers mit angehängtem Sattelauflieger

Fig.8   eine Draufsicht auf einen achsschenkelgelenkten selbstfahrenden Feldhäcksler mit nachfolgendem von einer Zugmaschine gezogenen Transportbehälter

Fig.9   ein Blockschaltbild der Vorrichtung.

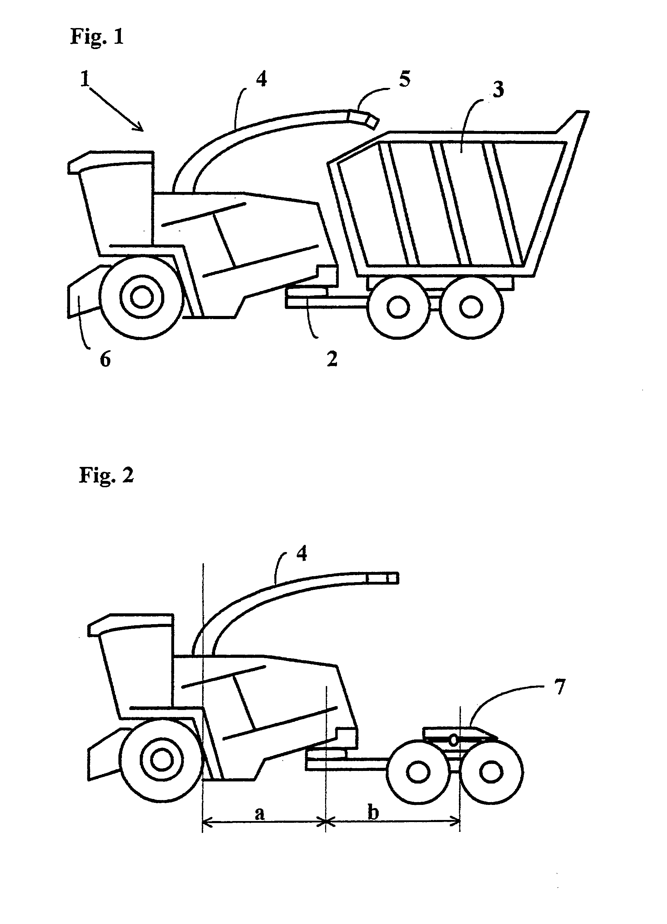

In Figur 1 wird ein selbstfahrender Feldhäcksler 1 mit Knicklenkung 2 und direkt aufgesetzten Transportbehälter 3 gezeigt. Das Erntegut wird über ein in Figur 1 nicht dargestellter Emtevorsatz von der Erntefläche aufgenommen und über die Einzugsaggregate 6 der nachgeschalteten Bearbeitungseinheit zugeführt. Das bearbeitete Erntegut wird dann über den in der Höhe verstellbaren Auswurfkrümmer 4 auf den Transportbehälter überladen. Die Auswurfklappen 5 geben dem Erntegutstrom die Abwurfrichtung vor. Ein befüllter Transportbehälter 3 wird dann durch eine Kippeinrichtung oder eine Kratzbodenentleerung auf einen weiteren Transportwagen überladen.

Figur 2 zeigt die Seitenansicht eines selbstfahrenden Feldhäckslers mit Knicklenkung und Sattelaufliegerkupplung 7. Der Abstand a stellt die Entfernung zwischen dem vertikale Krümmerdrehachse und dem Drehpunkt des Knickgelenkes 2 dar. Die Entfernung zwischen dem Knickgelenk 2 und der Sattelaufliegerkupplung 7 wird durch den Abstand b bezeichnet.

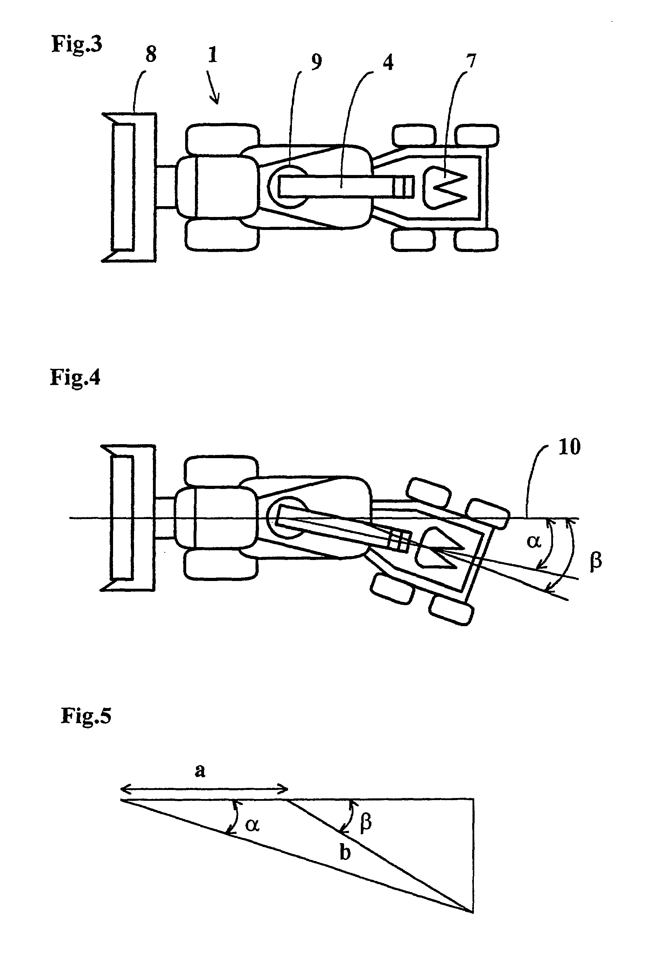

Die Draufsicht in Figur 3 stellt einen selbstfahrenden Feldhäcksler mit Knicklenkung, Sattelaufliegerkupplung 7 und angebautem Erntevorsatz 8 dar. Der Feldhäcksler befindet sich in Geradeausfahrt und die die Fahrtrichtung der landwirtschaftlichen Erntemaschine vorgebende Größe, hier der Knickwinkel, ist daher gleich Null. Die Überladeeinrichtung, hier ein Auswurfkrümmer 4, ist so ausgerichtet, daß das Erntegut annähernd senkrecht oberhalb der Sattelkupplung 7 hinweggeworfen wird. Eine Verschwenkung der Überladeeinrichtung 4 um seine vertikale Achse, kann durch einen Drehkranz 9 vorgenommen werden. Der Antrieb der Schwenkeinrichtung erfolgt bei einem Feldhäcksler 1 auf einfache Art durch einen Hydromotor. Dieser wird über eine elektrohydraulische Ventilsteuerung in der von der Vorrichtung vorgegebenen Richtung angesteuert wird. Die relative Stellung der Überladeeinrichtung 4 zur Fahrzeuglängsachse wird durch ein Abfühlmittel wie beispielsweise einem Inkrementalgeber mit Drehrichtungserkennung ermittelt und der Auswerteelektronik zugeführt.

In Figur 4 ist die Draufsicht von Figur 3 erneut dargestellt. Sie unterscheidet sich von der Figur 3 dadurch, daß der selbstfahrende Feldhäcksler 1 mit einer eingeschlagenen Knicklenkung abgebildet ist. Mit dem Winkel β wird der Knickwinkel bezeichnet. Dieser Winkel ist die Sollgröße für die Steuerung der Überladerichtung des Auswurfkrümmers 4. Unter der Winkelbezeichnung α wird der Ist-Winkel der Überladeeinrichtung 4 zur Fahrzeuglängsachse 10 aufgeführt. In dieser Figur ist die Überladerichtung so ausgesteuert, daß das Erntegut senkrecht oberhalb der Sattelaufliegerkupplung hinweggefördert wird.

Zur Berechnung des Krümmerwinkels sind in Figur 5 die Berechnungsgrößen aus den Figuren 2 und 4 zusammen dargestellt. Aus den geometrischen Abmessungen der Erntemaschine sind die Abstände a und b bekannt. Der Winkel β wird von dem Abfühlmittel in dem Knickgelenk ermittelt. Aus den bekannten Größen läßt sich dann der Winkel α der Überladeeinrichtung nach der folgenden Gleichung berechnen:

$$\alpha = \arctan\left(\frac{b \times \sin\beta}{a + b\cos\beta}\right)$$

Anhand dieser Gleichung kann die Überladeeinrichtung so gesteuert werden, daß der Erntegutstrahl immer senkrecht oberhalb der Sattelaufliegerkupplung hinweggefördert wird. Die Gleichung kann aber auch für die Steuerung der Überladeeinrichtung 4 bei direkt auf den Knicklenker aufgesetzten Transportbehälter verwendet werden. Der Abstand b gibt einen von dem Knickgelenk entfernten Punkt an, über welchen der Erntegutstrom gefördert werden soll. Diese Entfernung b kann durch eine einfache Vorgabe, durch beispielsweise einen Potentiometer als Vorgabewert der Auswerteelektronik zugeführt werden. Eine Veränderung in Abhängigkeit der Überladeentfernung der Überladeeinrichtung ist eine weitere Möglichkeit. Durch dies Vorgabe wird die Überladerichtung so gesteuert, daß der Erntegutstrahl in Richtung oder über diesen Punkt hinweg überladen wird.

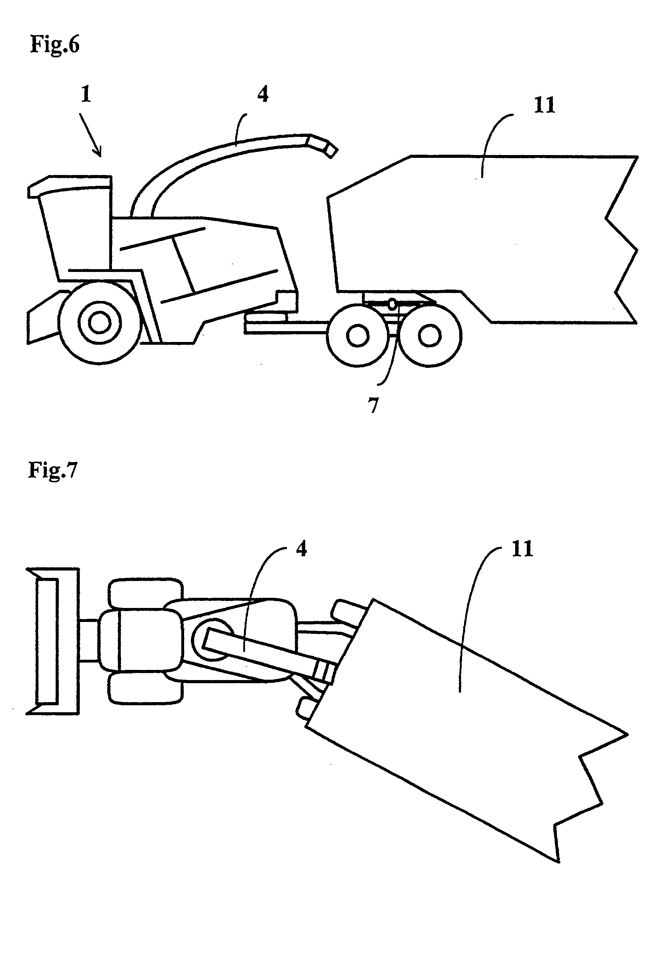

In Figur 6 wird eine Seitenansicht eines knickgelenkten selbstfahrenden Feldhäckslers 1 mit angehängtem Sattelauflieger 11 gezeigt. Diese Sattelauflieger 11 können schnell von dem selbstfahrenden Feldhäcksler 1 durch die Schattelaufliegerkupplung 7 gegen einen leeren Sattelauflieger 11 ausgetauscht werden.

Bei dieser Art von Transportbehältermitführung besteht weiter die Möglichkeit den Verdrehwinkel zwischen der Transportbehälterlängsachse und der Sattelkupplung 7 gegenüber beispilesweise der Geradeausfahrt zu ermitteln. Aus diesem Abfühlwert kann dann eine erweiterte Steuerung der Überladeeinrichtung 4 realisiert werden. Die Überladerichtung kann dann auch von der Ausrichtung des Ausfwurfkrümmers auf die Sattelaufliegerkupplung 7 abweichen. Durch die Erfassung des zusätzlichen Verdrehwinkels ist es möglich, die Überladeeinrichtung 4 auch auf einen hinter der Sattelkupplung 7 liegenden Punkt, der vorteilhaft im Sattelauflieger 11 liegt, auszurichten. Mit Hilfe einer aus den bekannten Winkel und Erntfernungen ermittelten Überladeentfernung besteht dann ferner die Möglichkeit die Überladezielentfernung zu variieren und eine sicheren Überladung zu erzielen.

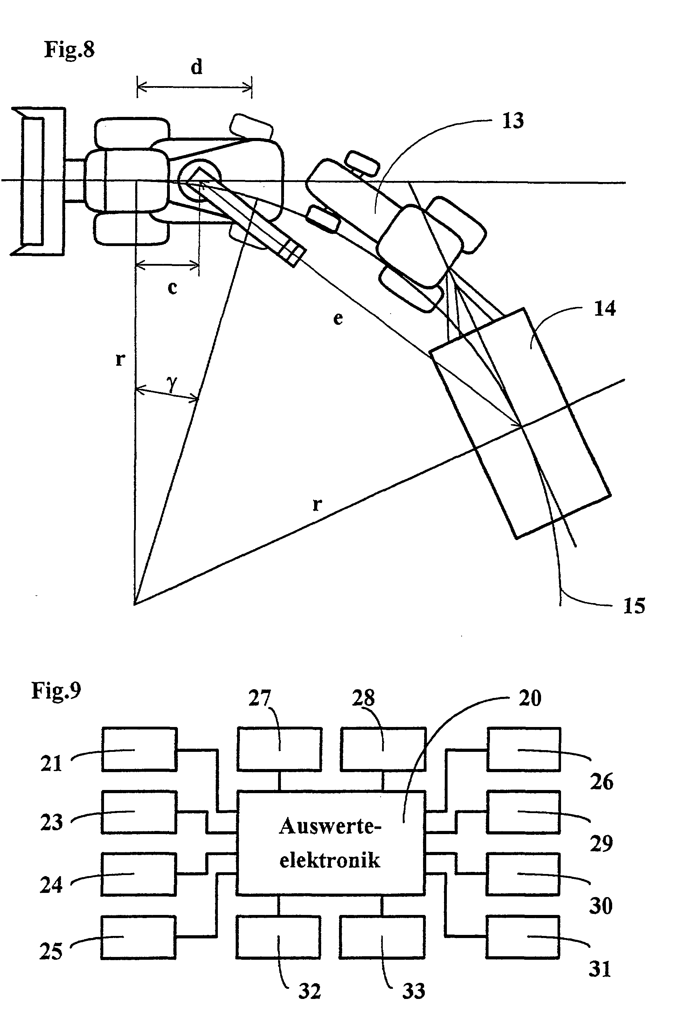

Figur 7 beinhaltet eine weitere Ansicht der in Figur 6 dargestellten Erntemaschine. Der dargestellte Feldhäcksler durchfährt momentan eine Kurve. Dabei ist der Auswurfkrümmer 4 so ausgerichtet, daß die Überladerichtung auf die Sattelaufliegerkupplung ausgerichtet ist.

In Figur 8 wird ein achsschenkelgelenkter selbstfahrender Feldhäcksler mit nachfolgendem Zugfahrzeug 13 mit angehängtem Transportwagen 14 dargestellt. Der durchfahrene Fahrweg ist eine Kurvenbahn 15 mit konstantem Kurvenradius r. Aus dem Lenkwinkel y und dem Achsabstand d der Erntemaschine kann der Kurvenradius r berechnet werden. Mit der Vorgabe einer Überladezielentfernung e und der Annahme, das der Abstand c gegenüber der Überladezielentfernung e sehr gering ist, kann mit Hilfe der Trigonometrie und des Kathetensatzes, der Krümmerwinkel α anhand der folgenden Gleichung:

$$\alpha = \arcsin\left(\frac{e}{2 \times r}\right)$$

berechnet werden.

In der Figur 9 wird ein Blockschaltbild der Vorrichtung dargestellt. Die Vorrichtung besteht aus der Auswerteelektronik 20 und weiteren Sensoren und Aktoren. Die Steuerung der Überladeeinrichtung wird durch einen Taster 21 aktiviert beziehungsweise deaktiviert. Den Status der Vorrichtung wird durch ein optischen oder akustische Meldeeinrichtung 31 angezeigt. Die Vorgabe der Überladezielentfernung e kann durch ein skaliertes Potentiometer 22 ausgewählt werden. Soll die Überladezielentfernung e aus den momentanen Einstellungen der Überladeeinrichtung und der Vorgabe einer Zielhöhe abgeleitet werden, kann dies durch die Betätigung des Taster 23 erfolgen. Der Krümmerwinkel α und der Auswurfklappenwinkel werden von den Abfühlmitteln 24 beziehungsweise 25 vorzugsweise als Potentiometerwerte erfaßt. Die Überladeeinrichtungshöhe wird aus der Ermittlung des Krümmerhöhenwinkels 26 abgeleitet. Für die manuelle Steuerung der Überladeeinrichtung sowie die Vorgabe eines Offsets sind weitere Taster 27 beziehungsweise 28 vorgesehen. Die die Fahrtrichtung der landwirtschaftlichen Erntemaschine vorgebende Größe wird durch die Abfühleinrichtung 30 ermittelt. Die Auswerteelektronik 20 steht ferner mit dem Bussystem 29 der Erntemaschine in Verbindung. Über dieses werden fahrzeugspezifische Einstellungen wie der Achsabstand und weitere notwendige geometrische Daten sowie Überladekenndaten beispielsweise die Überladezielhöhe und auch variable Werte wie beispielsweise die Fahrgeschwindigkeit übermittelt. Zur Einstellung der Überladerichtung steht die Auswerteelektronik 20 mit Einstellelementen 32, 33 in Verbindung. Diese Einstellelemente können eine Hydraulikpumpenmotor-Kombination oder wie hier ausgeführt zwei elektrohydraulische Ventile für eine einfache links/rechts Hydromotorsteuerung sein.

**Patentansprüche**

1. Vorrichtung zur Überladung von landwirtschaftlichen Erntegütern von landwirtschaftlichen Erntemaschinen (1) auf Transportbehälter (3) durch eine schwenkbare Überladeeinrichtung (4)
   **dadurch gekennzeichnet,**
   **daß** der Winkel ($\alpha$) zwischen der Überladeeinrichtung (4) und der Fahrzeuglängsrichtung (10) anhand einer die Fahrtrichtung der landwirtschaftlichen Emtemaschine (1) vorgebenden Größe ($\beta,\gamma$) gesteuert wird.

2. Vorrichtung nach Anspruch 1
   **dadurch gekennzeichnet,**
   **daß** die die Fahrtrichtung der landwirtschaftlichen Erntemaschine (1) vorgebende Größe der Knickwinkel ($\beta$) eines knickgelenkten landwirtschaftlichen Emtemaschine (1) ist.

3. Vorrichtung nach Anspruch 1
   **dadurch gekennzeichnet,**
   **daß** die die Fahrtrichtung der landwirtschaftlichen Erntemaschine vorgebende Größe der Lenkwinkel ($\gamma$) einer achsschenkelgelenkten landwirtschaftlichen Erntemaschine (1) ist.

4. Vorrichtung nach mindestens einem der Ansprüche 1 bis 3,
   **dadurch gekennzeichnet,**
   **daß** die Überladerichtung aus der die Fahrtrichtung der landwirtschaftlichen Erntemaschine (1) vorgebende Größe anhand eines in der Auswerteelektronik (20) abgespeicherten empirisch ermittelten Datenfeldes errechnet beziehungsweise gesteuert wird.

5. Vorrichtung nach mindestens einem der Ansprüche 1 bis 3.

   **dadurch gekennzeichnet,**
   **daß** die Überladerichtung aus der die Fahrtrichtung der landwirtschaftlichen Erntemaschine (1) vorgebende Größe anhand einer in der Auswerteelektronik (20) abgespeicherten Kennlinie errechnet beziehungsweise gesteuert wird.

6. Vorrichtung nach mindestens einem der Ansprüche 1 bis 3,
   **dadurch gekennzeichnet,**
   **daß** die Überladerichtung aus der die Fahrtrichtung der landwirtschaftlichen Erntemaschine (1) vorgebende Größe und durch mindestens eine vorgegebene Überladezielentfernung (e) errechnet beziehungsweise gesteuert wird.

7. Vorrichtung nach mindestens einem der Ansprüche 1 bis 6,
   **dadurch gekennzeichnet,**
   **daß** die Überladezielentfernung (e) eine feste, fahrzeugspezifische Entfernung ist.

8. Vorrichtung nach Anspruch 7,
   **dadurch gekennzeichnet,**
   **daß** die Überladezielentfernung (e) die Entfernung zwischen Knickpunkt und Sattelkupplung (7) ist.

9. Vorrichtung nach mindestens einem der Ansprüche 6 bis 8,
   **dadurch gekennzeichnet,**
   **daß** die Überladezielentfernung (e) aus der Stellung der die Überladeentfernung bestimmenden Elemente der Überladeeinrichtung (4) berechnet wird.

10. Vorrichtung nach mindestens einem der Ansprüche 6 oder 9,
    **dadurch gekennzeichnet,**
    **daß** die Überladezielentfernung (e) in die Auswerteelektronik (20) einprogrammierbar ist.

11. Vorrichtung nach mindestens einem der Ansprüche 1 bis 10,
    **dadurch gekennzeichnet,**
    **daß** die Verschwenkgeschwindigkeit der Überladeeinrichtung (4) beim automatischen Verschwenken variierbar ist.

12. Vorrichtung nach Anspruch 11,
    **dadurch gekennzeichnet,**
    **daß** die Überladeeinrichtung (4) mit mindestens zwei verschiedenen Geschwindigkeiten verschwenkt werden kann.

13. Vorrichtung nach mindestens einem der Ansprüche 1 bis 12,
    **dadurch gekennzeichnet,**
    **daß** bei der Steuerung der Überladeeinrichtung (4) der zurückgelegte Fahrweg der landwirtschaftlichen Erntemaschine (1) berücksichtigt wird.

14. Vorrichtung nach mindestens einem der Ansprüche 11 bis 13,
    **dadurch gekennzeichnet,**
    **daß** die Verschwenkgeschwindigkeit in Abhängigkeit der Fahrgeschwindigkeit der landwirtschaftlichen Erntemaschine (1) gesteuert wird.

15. Vorrichtung nach mindestens einem der Ansprüche 1 bis 14,
    **dadurch gekennzeichnet,**
    **daß** der Fahrweg und die die Fahrtrichtung der landwirtschaftlichen Erntemaschine (1) vorgebende Größe (β,γ) in einem Ringspeicher abgespeichert werden.

16. Vorrichtung nach mindestens einem der Ansprüche 11 bis 15,
    **dadurch gekennzeichnet,**
    **daß** aus den in dem Ringspeicher abgelegten Werte eine Überladerichtung so berechnet wird, daß Erntegutstrom in einer vorgegebenen Überladezielentfernung (e) und -höhe in den sich auf dem zurückliegenden Fahrweg befindlichen Transport-behälter (3) trifft.

17. Vorrichtung nach mindestens einem der Ansprüche 1 bis 16,
    **dadurch gekennzeichnet,**
    **daß** die automatische gesteuerte Überladerichtung durch eine manuelle Steuerung der Überladerichtung korrigierbar ist.

18. Vorrichtung nach mindestens einem der Ansprüche 1 bis 17,
    **dadurch gekennzeichnet,**
    **daß** die Vorrichtung über einen Taster aktivierbar ist und die aktivierte Steuerung mittels einer optischen oder akustischen Meldeeinrichtung (31) angezeigt wird.

**Claims**

1. Apparatus for transloading agricultural crop materials from agricultural harvesters (1) on to transport containers (3) by a pivotable transloading device (4), **characterised in that** the angle (α) between the transloading device (4) and the longitudinal direction (10) of the vehicle is controlled on the basis of a parameter (β, γ) predetermining the direction of travel of the agricultural harvester (1).

2. Apparatus according to claim 1 **characterised in that** the parameter predetermining the direction of travel of the agricultural harvester (1) is the centre swivel angle (β) of a centre swivel-steered agricultural harvester (1).

3. Apparatus according to claim 1 **characterised in that** the parameter predetermining the direction of travel of the agricultural harvester (1) is the steering angle (γ) of a stub axle-steered agricultural harvester (1).

4. Apparatus according to at least one of claims 1 to 3 **characterised in that** the transloading direction is calculated or controlled from the parameter predetermining the direction of travel of the agricultural harvester (1) on the basis of an empirically ascertained data field stored in the electronic evaluation system (20).

5. Apparatus according to at least one of claims 1 to 3 **characterised in that** the transloading direction is calculated or controlled from the parameter predetermining the direction of travel of the agricultural harvester (1) on the basis of a characteristic curve stored in the electronic evaluation system (20).

6. Apparatus according to at least one of claims 1 to 3 **characterised in that** the transloading direction is calculated or controlled from the parameter predetermining the direction of travel of the agricultural harvester (1) and by at least one predetermined transloading target distance (e).

7. Apparatus according to at least one of claims 1 to 6 **characterised in that** the transloading target distance (e) is a fixed distance specific to the vehicle.

8. Apparatus according to claim 7 **characterised in that** the transloading target distance (e) is the distance between the centre swivel point and the fifthwheel coupling.

9. Apparatus according to at least one of claims 6 to 8 **characterised in that** the transloading target distance (e) is calculated from the position of the elements of the transloading device (4), which determine the transloading distance.

10. Apparatus according to at least one of claims 6 and 9 **characterised in that** the transloading target distance (e) can be programmed into the electronic evaluation system (20).

11. Apparatus according to at least one of claims 1 to 10 **characterised in that** the speed of pivotal movement of the transloading device (4) is variable in the automatic pivotal movement.

12. Apparatus according to claim 11 **characterised in that** the transloading device (4) can be pivoted at at least two different speeds.

13. Apparatus according to at least one of claims 1 to 12 **characterised in that** the travel distance covered by the agricultural harvester (1) is taken into consideration when controlling the transloading device (4).

14. Apparatus according to at least one of claims 11 to 13 **characterised in that** the pivotal speed is controlled in dependence on the speed of travel of the agricultural harvester (1).

15. Apparatus according to at least one of claims 1 to 14 **characterised in that** the travel distance and the parameter (β,γ) predetermining the direction of travel of the agricultural harvester (1) are stored in a ring memory.

16. Apparatus according to at least one of claims 11 to 15 **characterised in that** a transloading direction is calculated from the values stored in the ring memory in such a way that crop material flow passes into the transport container (3) on the travel path being covered at a predetermined transloading target distance (e) and height.

17. Apparatus according to at least one of claims 1 to 16 **characterised in that** the automatically controlled transloading direction can be corrected by manual control of the transloading direction.

18. Apparatus according to at least one of claims 1 to 17 **characterised in that** the apparatus is activatable by way of a keying device and the activated control is displayed by means of an optical or acoustic signalling device (31).

**Revendications**

1. Dispositif pour le transfert de produits agricoles récoltés de machines de récolte (1) agricoles vers des récipients de transport (3) au moyen d'un dispositif de transfert (4) pivotant, **caractérisé en ce que** l'angle (α) entre le dispositif de transfert (4) et la direction longitudinale (10) du véhicule est commandé à l'aide d'une grandeur (β, γ) indiquant la direction de déplacement de la machine de récolte (1) agricole.

2. Dispositif selon la revendication 1, **caractérisé en ce que** la grandeur indiquant la direction de déplacement de la machine de récolte (1) agricole est l'angle de pivotement (β) d'une machine de récolte (1) agricole à direction pivotante au centre.

3. Dispositif selon la revendication 1, **caractérisé en ce que** la grandeur indiquant la direction de déplacement de la machine de récolte (1) agricole est l'angle de braquage (γ) d'une machine de récolte (1) agricole à direction à fusées.

4. Dispositif selon au moins une des revendications 1 à 3, **caractérisé en ce que** la direction de transfert est calculée voire commandée à partir de la grandeur indiquant la direction de déplacement de la machine de récolte (1) agricole à l'aide d'un champ de données déterminé empiriquement et mémorisé dans l'électronique de traitement (20).

5. Dispositif selon au moins une des revendications 1 à 3, **caractérisé en ce que** la direction de transfert est calculée voire commandée à partir de la grandeur indiquant la direction de déplacement de la machine de récolte (1) agricole à l'aide d'une courbe caractéristique mémorisée dans l'électronique de traitement (20).

6. Dispositif selon au moins une des revendications 1 à 3, **caractérisé en ce que** la direction de transfert est calculée voire commandée à partir de la grandeur indiquant la direction de déplacement de la machine de récolte (1) agricole et avec au moins une distance de cible de transfert (e) prédéterminée.

7. Dispositif selon au moins une des revendications 1 à 6, **caractérisé en ce que** la distance de cible de transfert (e) prédéterminée est une distance fixe spécifique du véhicule.

8. Dispositif selon la revendication 7, **caractérisé en ce que** la distance de cible de transfert (e) est la distance entre le point de pivotement et la sellette (7).

9. Dispositif selon au moins une des revendications 1 à 8, **caractérisé en ce que** la distance de cible de transfert (e) est calculée à partir de la position des éléments du dispositif de transfert (4) qui déterminent la distance de transfert.

10. Dispositif selon au moins une des revendications 6 ou 9, **caractérisé en ce que** la distance de cible de transfert (e) peut être programmée dans l'électronique de traitement (20).

11. Dispositif selon au moins une des revendications 1 à 10, **caractérisé en ce que** la vitesse de pivotement du dispositif de transfert (4) est variable dans le cas du pivotement à commande automatique.

12. Dispositif selon la revendication 11, **caractérisé en ce que** leu dispositif de transfert (4) peut pivoter avec au moins deux vitesses différentes.

**13.** Dispositif selon au moins une des revendications 1 à 12, **caractérisé en ce que** dans la commande du dispositif de transfert (4) il est tenu compte de la distance parcourue de la machine de récolte (1) agricole.

**14.** Dispositif selon au moins une des revendications 11 à 13, **caractérisé en ce que** la vitesse de pivotement est commandée en fonction de la vitesse de déplacement de la machine de récolte (1) agricole.

**15.** Dispositif selon au moins une des revendications 1 à 14, **caractérisé en ce que** le trajet et la grandeur ($\beta$, $\gamma$) indiquant la direction de déplacement de la machine de récolte (1) agricole sont mémorisés dans une mémoire à tores.

**16.** Dispositif selon au moins une des revendications 11 à 15, **caractérisé en ce qu'**à partir des valeurs mémorisées dans la mémoire à tores est calculée une direction de transfert telle, que le flux de produit récolté arrive à une distance (e) et une hauteur de cible dans le récipient de transport (3) se trouvant en arrière sur le trajet de déplacement.

**17.** Dispositif selon au moins une des revendications 1 à 16, **caractérisé en ce que** le dispositif de transfert à commande automatique peut être corrigé par un contrôle manuel de la direction de transfert.

**18.** Dispositif selon au moins une des revendications 1 à 17, **caractérisé en ce que** le dispositif peut être activé au moyen d'un bouton-poussoir et la commande activée signalée. à l'aide d'un dispositif de signalisation optique ou acoustique.

Fig. 1

Fig. 2

**Fig.3**

**Fig.4**

**Fig.5**

**Fig.6**

**Fig.7**

**Fig.8**

**Fig.9**